# EUROPÄISCHE PATENTSCHRIFT

(11) **EP 2 864 053 B1**
(45) Veröffentlichungstag und Bekanntmachung des Hinweises auf die Patenterteilung: **21.08.2019**
(21) Anmeldenummer: 12780135.5
(22) Anmeldetag: 11.10.2012
(51) Int. Cl.: B04B 1/08, B04B 7/08, B04B 9/04

(54) **SEPARATOR**
SEPARATOR
SÉPARATEUR

(30) Priorität: 25.06.2012 DE 102012105499
(43) Veröffentlichungstag der Anmeldung: 29.04.2015
(73) Patentinhaber: GEA Mechanical Equipment GmbH, 59302 Oelde (DE)
(72) Erfinder: MACKEL, Wilfried, 59510 Lippetal-Herzfeld (DE); BATHELT, Thomas, 59302 Oelde (DE); QUITER, Kathrin, 48317 Drensteinfurt (DE); VOLTMANN, Angelika, 33368 Rheda-Wiedenbrück (DE); HOMANN, Thomas, 33330 Gütersloh (DE); MEIER, Ulrich, 59302 Oelde (DE)
(74) Vertreter: Specht, Peter
(86) Internationale Anmeldenummer: PCT/EP2012/070182
(87) Internationale Veröffentlichungsnummer: WO 2014/000829

(56) Entgegenhaltungen:
- EP-A1- 1 685 908
- EP-A2- 0 361 964
- WO-A2-2012/013654
- DE-A1- 2 701 624
- DE-A1- 10 333 058
- DE-C1- 4 314 440
- US-A- 6 162 163
- US-A1- 2011 319 248

## Beschreibung

Die Erfindung betrifft einen Separator nach dem Oberbegriff des Anspruchs 1.

Zentrifugal-Separatoren zur Realisierung eines kontinuierlichen Betriebs sind seit langem bekannt, so in einer Ausgestaltung als Düsenseparatoren aus der JP 62 - 117649 A. Einen Separator mit miteinander verschraubten, massiven Trommelunter- und Trommeloberteilen zeigt ferner die US 2,286,354. Neben Düsenseparatoren sind solche mit Feststoffaustragsöffnungen bekannt, denen ein hydraulisch betätigbarer Kolbenschieber zugeordnet ist, mit dem die Feststoffaustragsöffnungen verschlossen und freigegeben werden können. Einen Separator ohne Feststoffaustrag in einer Ausbildung als Trenner zeigt die US 2,017,734.

Ein Separator nach dem Oberbegriff des Anspruchs 1 zum einmaligen Verarbeiten einer Produktcharge ist aus der US2011/0319248 A1 bekannt. Zum technologischen Hintergrund seien ferner die EP 0 361 964 A12 und die EP 1 685 908 A1 sowie die DE 2701624 OS und die WO 2012/013654 A genannt.

Bei gattungsgemäßen Zentrifugen insbesondere in Hinsicht auf die Verarbeitung von Produkten unter hygienischen Bedingungen der Bedarf nach weiteren neuen konstruktiven Wegen.

Die Lösung dieses Problems ist die Aufgabe der Erfindung.

Die Erfindung löst dieses Problem durch den Gegenstand des Anspruchs 1.

Das Mittel zum Klären eines zu verarbeitenden - zu klärenden - Produktes von Feststoffpartikeln ist vorzugsweise ein Trenntellerpaket aus konischen Trenntellern aus Kunststoff, kann aber beispielweise auch ein einstückiger Klär-/Abscheideeinsatz aus Kunststoff nach Art der DE 10 2008 052 630 A1 sein oder ein anderes Mittel zum Klären eines Produktes von Feststoffpartikeln wie ein Rippenkörper mit radialen Rippen oder dgl..

Danach besteht ein Teil der und vorzugweise bestehen sogar sämtliche der produktberührenden Bereiche des rotierenden Systems aus einem Kunststoff oder einem Kunststoff-Verbundwerkstoff, insbesondere das Trommelunterteil und das Trommeloberteil und das Tellerpaket. Besonders bevorzugt bestehen ferner das Zulaufsystem und das Ablaufsystem aus Kunststoff oder einem Kunststoff-Verbundwerkstoff.

Derart ist es möglich, einen Teil der Trommel oder vorzugsweise sogar die gesamte Trommel - vorzugsweise nebst den Zulauf- und Ablaufsystemen bzw. -bereichen - für eine Einmalverwendung auszulegen, was insbesondere in Hinsicht für die Verarbeitung pharmazeutischer Produkte wie Fermentationsbrühen oder dgl. von Interesse und Vorteil ist, da nach dem Betrieb zur Verarbeitung einer entsprechenden Produktcharge im während der Verarbeitung der Produktcharge vorzugsweise kontinuierlichen Betrieb keine Reinigung der Trommel durchzuführen ist sondern die Trommel insgesamt ausgetauscht wird. Mit einer Reinigung verbundene hygienische Probleme werden hierdurch auf einfache Weise ausgeschlossen. Die produktberührenden Teile können ganz entsorgt oder recycelt werden. Die Entsorgung ist insbesondere auch bei gefährlichen Stoffen von Interesse.

Es ist auch denkbar, bei einem Klärvorgang eines Produktes sehr schwere Stoffe aufzukonzentrieren und die Trommel nach der Verarbeitung einer Charge einzuschmelzen oder beispielweise in einer Säure oder dgl. aufzulösen, um den schweren Stoff als Rückstand dieses Vorgangs zu gewinnen.

Durch den Einsatz von Kunststoffteilen können zudem die Herstellkosten relativ gering gehalten werden.

Vorzugsweise ist die Trommel mit einer Spindelkonstruktion drehbar, welche vorzugsweise aus einem Kunststoff oder einem Kunststoff-Verbundwerkstoff besteht und welche vorzugsweise direkt mit der Abtriebswelle eines Motors gekoppelt ist, wobei die Spindelkonstruktion kein Drehlager an ihrem Außenumfang aufweist.

Diese Konstruktion ist einfach und robust und für die leichte Trommelkonstruktion sehr gut geeignet. Die Funktion der Lagerung der Trommel übernimmt in einfacher Weise der Elektromotor bzw. dessen Rotorlagerung.

Es ist dabei vorteilhaft sowie besonders hygienisch, dass die gesamte Trommel, insbesondere auch ihr Zulaufsystem und ihr Ablaufsystem, in abgedichteter Bauart ausgebildet ist/sind.

Nach einer vorteilhaften Weiterbildung ist die Trommel von einem Gehäuse umgeben, welche vorzugsweise ebenfalls aus Kunststoff oder einem Kunststoffverbundwerkstoff besteht. Es ist sogar möglich, dass der gesamte Separator bis auf den Motor aus Kunststoff besteht, so dass er insgesamt bis auf den Motor vorzugsweise als vormontierte Einheit wechselbar ist.

Nach einer besonders vorteilhaften Weiterbildung der Erfindung ist das Trommelunterteil direkt einstückig mit einem Verteileransatz versehen, welcher einen oder mehrere Verteilerkanäle zum Überleiten des zu verarbeitenden Produktes aus einem Zulaufrohr in den Trommelinnenraum aufweist. Derart werden zwei sonst getrennt herzustellende Bauteile oder sogar Baugruppen vereinigt, was insbesondere die Herstellung aus Kunststoff möglich macht.

Vorzugsweise wird als Kunststoff ein recyclingfähiger Kunststoff verwendet, insbesondere PE (Polyethylen), PP (Polypropylen) oder TK-PEEK (insbesondere teilkristallines) Polyethereretherketon.

Die aus Kunststoff Teile können im Spritzgießverfahren hergestellt werden und ggf. nachbearbeitet werden, z.B. mit Bohrungen und dgl. versehen werden, wo es notwendig ist.

Schrauben und dgl. können auch aus Kunststoff bestehen, sie können aber, insbesondere wenn sie nicht produktberührend sind, auch aus einem anderen Material gefertigt sein.

Besonders vorteilhaft erscheint ein Betrieb des rotierenden Systems bei unterkritischen Drehzahlen (unterhalb der ersten Resonanzfrequenz des rotierenden Systems), da ein solcher Antrieb das Antriebssystem deutlich vereinfacht und aufgrund der Werkstoffauswahl dieser Separator im Vergleich zu anderen heute üblichen Separatoren in anderen Drehzahlbereichen betrieben wird.

Der Energiebedarf kann gegenüber bestehenden Konstruktionen in der Regel gesenkt werden. Durch die niedrige Drehzahl ist zudem die Geräuschemission entsprechend niedrig.

Mit der Erfindung wird auch eine Verwendung eines erfindungsgemäßen Separators als Einwegseparator zum einmaligen Verarbeiten einer Produktcharge geschaffen, wobei der Separator ohne Antrieb nach dem Verarbeiten dieser Produktcharge vorzugsweise entsorgt wird, beispielsweise durch fachgerechtes Verbrennen, beispielsweise, um Gefahrstoffe zu entsorgen.

Die Erfindung schafft auch ein Verfahren zum Betreiben eines erfindungsgemäßen Separators. Bei diesem Verfahren werden bei einem Klärvorgang eines Produktes Stoffe aufkonzentriert, die sich im Trommelinnenraum, im Bereich des größten Innenumfangs sammeln. Sodann wird die Trommel nach der Verarbeitung einer Charge aufgelöst - beispielsweise verbrannt oder eingeschmolzen oder beispielweise in einer Säure oder dgl. Aufgelöst - um den schweren Stoff als Rückstand dieses Vorgangs zu gewinnen.

Falls Feststoffe so stark kompaktieren, dass sie nicht oder nur sehr schwer ausgetragen werden können, oder die Feststoffableitungsbohrungen verstopfen oder blockieren, besteht die Möglichkeit dazu, von Zeit zu Zeit oder im Bedarfsfall über das Ableitungssystem (Ableiter und ggf. Bohrungen im Trommeldeckel) durch kurzzeitiges Spülen mit einem Medium (Wasser, geklärtes Produkt, Pufferlösung, ...) die Feststoffe anlösen bzw. wieder verdünnen, so dass diese trotzdem über die Entleerungsbohrungen ausgetragen werden können.

Weitere vorteilhafte Ausgestaltungen sind den übrigen Unteransprüchen zu entnehmen.

Nachfolgend wird die Erfindung anhand von Ausführungsbeispielen unter Bezug auf die Figuren näher beschrieben. Es zeigt:

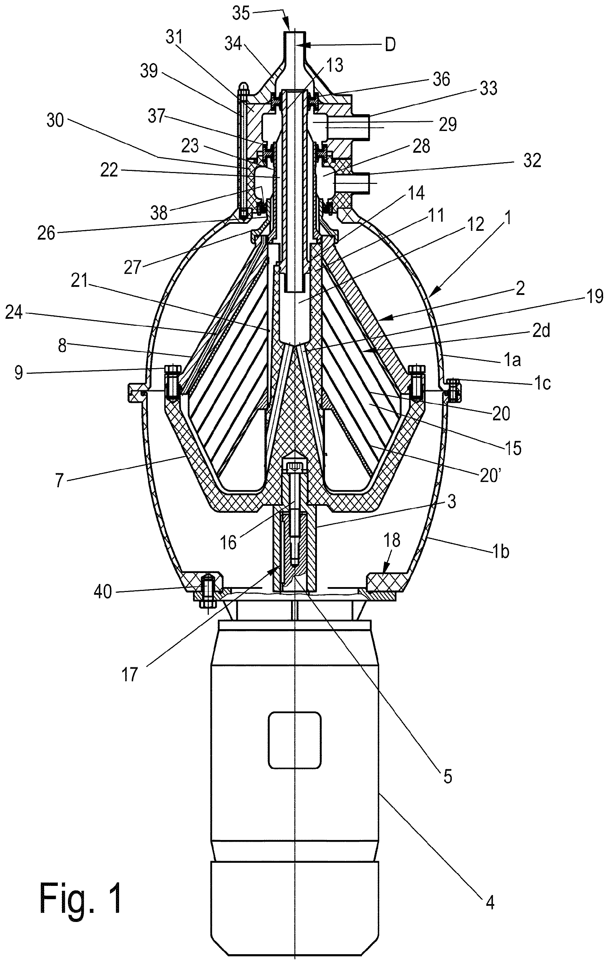

Fig. 1 eine Ansicht eines erfindungsgemäßen Separators mit einem Direktantrieb und mit geschnitten dargestelltem Gehäuse und Trommel.

Fig. 1 zeigt einen Schnitt durch den Bereich des Gehäuses 1 und der Trommel 2 eines erfindungsgemäßen Separators, mit dem ein flüssiges Produkt im Zentrifugalfeld in zwei Phasen getrennt werden kann. Das Gehäuse 1 weist ein(nahezu halbkugelsegmentartiges) Gehäuseoberteil 1a und ein entsprechendes Gehäuseunterteil 1b auf, die hier beispielhaft an einem Flanschabschnitt mit Schrauben 1c verbunden sind. Das Gehäuse kann aus Kunststoff oder einem Kunststoff-Verbundwerkstoff bestehen.

Die Trommel 2 weist eine vertikale Drehachse D auf und ist hier auf eine antreibende - hier in einfacher Bauart - hülsenförmige Spindelkonstruktion 3 aufgesetzt, die direkt oder über zwischengeschaltete Getriebeelemente mit einem Antriebsmotor 4 gekoppelt ist.

Eine besonders kompakte Bauform wird erreicht, wenn der Antriebsmotor ein Elektromotor 4 ist, welcher direkt in axialer Verlängerung der Spindelkonstruktion 3 angeordnet ist, vorzugsweise an der von der Trommel abgewandten Seite der Spindelkonstruktion 3.

Hier ist die Spindel 3 direkt mit einem Bolzen 16 axial mit einer Abtriebswelle 5 verbunden. Sie ist ferner mit einem Drehmomentübertragungsmittel, hier eine Paßfeder 17, in Umfangsrichtung mit der Abtriebswelle 5 des Elektromotors 4 drehfest verbunden. Das Drehmomentübertragungsmittel kann auch in anderer Form - beispielsweise als Drehmomentübertragungskontur - ausgebildet werden (hier nicht dargestellt) Die drehbare Trommel 2 kann mit einem Preßsitz (z.B. in einem konischen Abschnitt) mit der Antriebsspindelkonstruktion 3 verbunden werden oder mittels eines sonstigen Drehmomentübertragungsmittels (hier nicht dargestellt).

Dabei wird vorzugsweise auf eine eigene Lagerung der Spindelkonstruktion 3 verzichtet, was die Konstruktion einfach und relativ preiswert realisierbar macht. Die Lagerung der Abtriebswelle 5 im Motorgehäuse 6 des Elektromotors 4 dient vielmehr vorzugsweise auch direkt als Lagerung des gesamten Rotorsystems bestehend aus Abtriebswelle 5, Spindelkonstruktion 3 und Trommel 2.

Der Motor 3 ist hier an seiner der Spindel 3 zugewandten Seite ferner an einem Flanschabschnitt 18 des Gehäuses 1 befestigt, beispielsweise mit Schraubbolzen 40 angeschraubt. Das Gehäuse oder der Flanschabschnitt können wiederum in hier nicht dargestellter Weise z.B. schraubend an einem hier nicht dargestellten Fundamt oder Maschinengestell oder dgl. festgelegt werden.

Die Trommel 2 weist konisches Trommelunterteil 7 und ein konisches Trommeloberteil 8 auf, so dass insgesamt ein doppeltkonischer Körper ausgebildet wird. Das Trommelunterteil 7 und das Trommeloberteil 8 sind vorzugsweise im Bereich ihres größten Umfangs mittels umfangsverteilter Schraubbolzen 9 miteinander verschraubt. Die Verbindung könnte aber auch in anderer Weise erfolgen, so mit einer Art Bajonettverschluss zwischen den beiden Teilen oder mit einem separaten Verschlussring schraubend, ähnlich zu Separatoren aus Metall. Denkbar wäre auch eine Tri-Clamp-Verbindung (Ring mit konischen Flächen verspannt). Denkbar wäre auch eine Art Sprengring zum Sichern des einen Trommelteils im anderen.

An einen hier unteren Abschnitt 10 des Trommelunterteils 7 schließt sich axial einstückig ein die Drehachse koaxial umgebender Verteileransatz 11 an, der einen vollständigen Verteiler zum Einleiten des Schleudergutes in den Trommelinnenraum 15 und zur Beschleunigung des Schleudergutes in Umfangsrichtung bei Drehungen der Trommel 2 ausbildet.

In dem Verteileransatz 11 ist im oberen Bereich eine sacklochartige Bohrung 12 ausgebildet, in welche ein Zulaufrohr 13 mündet. Das Zulaufrohr ist an seinem Außenumfang mit einer ersten Umfangsdichtung (z.B. ein O-Ring) 14 gegen den Innenumfang der Bohrung 12 abgedichtet.

Das Zulaufrohr 13 und der Verteileransatz 11 bilden derart ein vorzugsweise vorteilhaft gegen die Umgebung abgedichtet ausgelegtes Zulaufsystem.

Die Bohrung 12 mündet ferner an ihrem unteren Ende in einen oder mehrere Verteilerkanäle 19, die schräg zur Drehachse ausgebildet sind und hier ebenfalls schräg in den eigentlichen Trommelinnenraum 15 münden.

Im Trommelinnenraum 15 sind Mittel zur Klärung wie insbesondere ein einteiliges oder vorzugsweise mehrteiliges Tellerpaket 20 angeordnet, dass als ein Stapel aus axial beabstandeten Trenntellern 20' ausgebildet ist, welche eine konische Grundform aufweisen und welche vorzugsweise verdrehsicher auf den Verteileransatz 11 aufgesetzt sind. Die Mittel zur Klärung könnten auch in andere Form ausgebildet sein, so als Rippenkörper mit radialen oder bogenförmigen Rippen oder als Kläreinsatz mit Klärkammern.

Die Trennteller 20' weisen hier vorzugsweise jeweils unterschiedliche Radien auf, was durch die konische Grundform des Trommelunterteils 7 bedingt wird, denn die Trennteller 20' erstrecken sich vorzugsweise außen bis kurz vor den Innenrand des Trommelunterteils 7, so dass ihr Durchmesser entsprechend von oben nach unten abnimmt.

Ein in den Trommelinnenraum 15 eingeleitetes Produkt wird in der Trommel 2 in verschiedene, vorzugsweise zwei, Produktphasen unterschiedlicher Dichte getrennt.

Zur Ableitung der verschiedenen Produktphasen aus der Trommel 2 dient ein Ablaufsystem mit zwei oder mehr Ablaufbereichen.

So fließt eine leichtere Flüssigkeitsphase radial nach innen und wird dort in einem Kanal 21 am Verteileransatz 11 axial nach oben in einen Ringkanal 22 geleitet, der zwischen dem Außenumfang des Zulaufrohrs 13 und einem Rohrstück 23 größeren Durchmessers ausgebildet ist, welches ebenfalls von oben in die Trommel 2 ragt.

Eine schwerere Flüssigkeitsphase (oder eine noch gerade fließfähige Feststoffphase) wird dagegen vom Bereich des größten Innenumfangs des Trommelinnenraums durch einen Kanal 25 im Trommeloberteil 8 geleitet, und zwar vorzugsweise bis in einen zweiten Ringkanal 26 zwischen dem äußeren Rohrstück 23 und einer Trommelabdeckung 27, die vorzugsweise ebenfalls aus Kunststoff besteht.

Die schwerere und die leichtere Flüssigkeitsphase fließen aus den Ringkanälen 22, 26 nach oben hin jeweils in axial übereinander angeordnete Ringräume 28, 29 in Ringkörpern 30, 31, die mit radialen Ableitungen 32, 33 versehen sind, durch welche die aus der Trommel abgeleitete leichtere und schwerere Phase weiter abgeleitet werden können. Nach oben hin ist auf den Ringkörper 33 eine ringförmige Abdeckung 34 mit einer Durchgangsbohrung 35 zum Einleiten von Flüssigkeit in das Zulaufrohr 13 angeordnet. Auch die Elemente 30, 31, 34 bestehen vorzugsweise aus Kunststoff.

Zwischen dem inneren Zulaufrohr und dem Ringkörper 31 bzw. der Abdeckung 34 ist eine erste Ringdichtung 36 angeordnet. Zwischen dem äußeren Rohrstück 23 und dem Ringkörper 31 ist ferner eine weitere Ringdichtung 37 angeordnet. Zudem ist zwischen der Abdeckung 27 und dem unteren Ringkörper eine weitere Ringdichtung 38 angeordnet.

Das Gehäuse 1, die Ringkörper 30, 31 und die Abdeckung 34 sind hier in einfacher Weise kompakt und sicher axial mit einem oder mehreren Bolzen, insbesondere Schraubbolzen 39 zusammengespannt.

Insbesondere auf die gezeigte Art oder auf andere Art sind vorzugsweise das Zulaufsystem sowie das Ablaufsystem mit den wenigstens zwei Abläufen und damit die gesamte Trommel 2 hermetisch abgedichtet ausgelegt, so dass das Produkt nicht mit der Umgebung der Trommel in Berührung kommt und durch das rotierende System gedrückt wird.

Dabei besteht ein Teil der oder vorzugsweise sogar sämtliche der produktberührenden Bereiche des rotierenden Systems aus einem Kunststoff oder einem Kunststoff-Verbundwerkstoff, insbesondere das Trommelunterteil 7 und das Trommeloberteil 8. Besonders bevorzugt bestehen ferner die Trennteller 20 aus Kunststoff sowie auch sämtliche der produktberührenden Bereiche des Zulaufsystems und der Ablaufsystems, auch soweit diese im Betrieb nicht rotieren.

Es ist zudem auch möglich und vorteilhaft, das Gehäuse 1 aus Kunststoff oder einem Kunststoff-Verbundwerkstoff zu fertigen.

Derart ist die Konstruktion sehr leicht, und kann nach dem Verarbeiten einer genügend großen Produktcharge entsorgt werden.

Fig. 1 zeigt eine Ausführung als Zweiphasen-Trennmaschine (Trennung eines Produktes in die Phasen: "Flüssig/Flüssig"), wobei die zweite Flüssigkeitsphase durch den Trommeldeckel 8 abgeleitet wird.

Dreiphasenmaschinen (zur Trennung in drei Phasen) sind ebenfalls realisierbar (hier nicht dargestellt).

Vorteilhaft und einfach ist die gesamte Trommel 2 nebst dem Zu-und Ablaufsystem und ggf. einem Teil des Gehäuses 1, dem Gehäuseoberteil 1a, als wechselbares vormontiertes Modul aus Kunststoff oder einem Kunststoff-Verbundwerkstoff ausgelegt ist.

### Bezugszeichen

- Gehäuse: 1
- Gehäuseoberteil: 1a
- Gehäuseunterteil: 1b
- Schrauben: 1c

- Trommel: 2
- Spindel: 3
- Antriebsmotor: 4
- Abtriebswelle: 5
- Motorgehäuse: 6
- Trommelunterteil: 7
- Trommeloberteil: 8
- Schraubbolzen: 9
- Abschnitt: 10
- Ansatz: 11
- Bohrung: 12
- dichtmaterial: 14
- Zulaufrohr: 13
- Umfangsdichtung: 14
- Trommelinnenraum: 15
- Bolzen: 16
- Paßfeder: 17
- Flanschabschnitt: 18
- Verteilerkanäle: 19
- Tellerpaket: 20
- Trennteller: 20'
- Kanal: 21
- Ringkanal: 22
- Rohrstück: 23
- Kanal: 25
- Ringkanal: 26
- Trommelabdeckung: 27
- Ringräume: 28, 29
- Ringkörper: 30, 31
- Ableitungen: 32, 33
- Abdeckung: 34
- Durchgangsbohrung: 35
- Ringdichtung: 36
- Ringdichtung: 37
- Ringdichtung: 38
- Schraubbolzen: 39
- Schraubbolzen: 40

## Patentansprüche

1. Separator zur zentrifugalen Trennung eines fließfähigen Produktes in verschiedene Phasen oder zur zentrifugalen Klärung eines Produktes, mit zumindest folgenden Merkmalen:
a. einer drehbaren Trommel (2) mit einem Trommelunterteil (7) und einem Trommeloberteil (8),
b. einem in der Trommel (2) angeordneten Mittel zur Klärung eines im Zentrifugalfeld zu verarbeitenden Produktes,
c. wobei eines oder beide folgender Teile konisch ausgebildet sind: das Trommeloberteil und das Trommelunterteil (8, 7),
d. wobei mehrere oder sämtliche folgender Elemente aus Kunststoff oder einem Kunststoff-Verbundwerkstoff bestehen:
- das Trommelunterteil (7),
- das Trommeloberteil (8),
- das Mittel zur Klärung,
**dadurch gekennzeichnet, dass**
e. die Trommel (2) mit ihrem Zulaufsystem und ihrem Ablaufsystem in abgedichteter Bauart ausgebildet ist, und
f. in das Trommeloberteil (8) wenigstens ein Ablaufkanal für eine schwere Produktphase integriert ist.

2. Separator nach Anspruch 1, **dadurch gekennzeichnet, dass** das Mittel zur Klärung ein Tellerpaket (20) aus einem Stapel von Trenntellern (20') ist.

3. Separator nach Anspruch 1 oder 2, **dadurch gekennzeichnet, dass** die Trommel (2) mit einer Spindelkonstruktion (3) drehbar ist.

4. Separator nach Anspruch 3, **dadurch gekennzeichnet, dass** die Spindelkonstruktion (3) aus einem Kunststoff oder einem Kunststoff-Verbundwerkstoff besteht.

5. Separator nach einem der vorstehenden Ansprüche 3 oder 4, **dadurch gekennzeichnet, dass** die Spindelkonstruktion (3) direkt mit der Abtriebswelle (5) eines Motors (4) gekoppelt ist und dass die Spindelkonstruktion (3) kein Drehlager an ihrem Außenumfang aufweist.

6. Separator nach einem der vorstehenden Ansprüche, **dadurch gekennzeichnet, dass** sämtliche produktberührende Bereiche der Trommel (2) aus Kunststoff bestehen.

7. Separator nach einem der vorstehenden Ansprüche, **dadurch gekennzeichnet, dass** die Trommel (2) von einem Gehäuse (1) umgeben ist.

8. Separator nach einem der vorstehenden Ansprüche, **dadurch gekennzeichnet, dass** der gesamte Separator bis auf den Motor (4) aus Kunststoff besteht.

9. Separator nach einem der vorstehenden Ansprüche, **dadurch gekennzeichnet, dass** das Trommelunterteil (7) direkt einstückig mit einem Verteileransatz (11) versehen ist, welcher Verteilerkanäle (13) zum Überleiten des zu verarbeitenden Produktes aus einem Zulaufrohr (13) in den Trommelinnenraum (15) aufweist.

10. Separator nach einem der vorstehenden Ansprüche, **dadurch gekennzeichnet, dass** die gesamte Trommel (2) nebst dem Zu-und Ablaufsystem und ggf. einem Teil Gehäuses, als wechselbares vormontiertes Modul aus Kunststoff oder einem Kunststoff-Verbundwerkstoff ausgelegt ist.

11. Separator nach einem der vorstehenden Ansprüche, **dadurch gekennzeichnet, dass** der gesamte Separator bis auf den Motor (4) als wechselbares vormontiertes Modul aus Kunststoff oder einem Kunststoff-Verbundwerkstoff ausgelegt ist.

12. Separator nach einem der vorstehenden Ansprüche, **dadurch gekennzeichnet, dass** der Motor (4) direkt an das Gehäuse (1) angeflanscht ist.

13. Separator nach einem der vorstehenden Ansprüche, **dadurch gekennzeichnet, dass** die produktberührende Abschnitte des Ablaufsystems aus Kunststoff bestehen.

14. Separator nach einem der vorstehenden Ansprüche, **dadurch gekennzeichnet, dass** die Ablaufbereiche des Ablaufsystems als Ringkanäle ausgebildet sind, die axial in Ringräume (28, 29) in Ringkörpern (30, 31) münden.

15. Separator nach Anspruch 15, **dadurch gekennzeichnet, dass** die Ringkörper (30, 31) aus Kunststoff oder einem Kunststoff-Verbundwerkstoff bestehen.

16. Separator nach einem der vorstehenden Ansprüche, **dadurch gekennzeichnet, dass** auf das Trommeloberteil eine aus Kunststoff bestehende Trommelabdeckung (27) aufgesetzt ist.

17. Verfahren zum Betreiben eines Separators nach einem der vorstehenden Ansprüche, **dadurch gekennzeichnet, dass** bei einem Klärvorgang eines Produktes sehr schwere Stoffe aufkonzentriert werden und dass die Trommel nach der Verarbeitung einer Charge eingeschmolzen wird oder beispielweise in einer Säure oder dgl. aufgelöst wird, um den schweren Stoff als Rückstand dieses Vorgangs zu gewinnen.

## Claims

1. A separator for the centrifugal separation of a free-flowing product into different phases or for the centrifugal clarification of a product, having at least the following features:
a. a rotatable drum (2) with a lower section (7) and an upper section (8),
b. a means arranged in the drum (2) for the clarification of a product which is to be processed in the centrifugal field,
c. wherein one or both of the following parts are of a conical design: the drum upper section and the drum lower section (8, 7),
d. wherein a plurality or all of the following elements consist of plastic or a plastic-composite material:
- the drum lower section (7),
- the drum upper section (8),
- the means for clarification,
**characterized in that**
e. the drum (2) with its feed system and its discharge system, is designed in a sealed type of construction, and
f. at least one discharge channel for a dense product phase is integrated into the drum upper section (8).

2. The separator as claimed in claim 1, **characterized in that** the means for clarification is a plate packet (2) consisting of a stack of separating plates (20').

3. The separator as claimed in claim 1 or 2, **characterized in that** the drum (2) can be rotated by means of a spindle construction (3).

4. The separator as claimed in claim 3, **characterized in that** the spindle construction (3) consists of a plastic or a plastic-composite material.

5. The separator as claimed in one of the preceding claims 3 or 4, **characterized in that** the spindle construction (3) is coupled directly to the output shaft (5) of a motor (4) and **in that** the spindle construction (3) has no rotational bearings on its outside circumference.

6. The separator as claimed in one of the preceding claims, **characterized in that** all the product-contact regions of the drum (2) consist of plastic.

7. The separator as claimed in one of the preceding claims, **characterized in that** the drum (2) is enclosed by a housing (1).

8. The separator as claimed in one of the preceding claims, **characterized in that** the entire separator, apart from the motor (4), consists of plastic.

9. The separator as claimed in one of the preceding claims, **characterized in that** the drum lower section (7) is provided directly in one piece with a distribution attachment (11) which has distribution channels (13) for transferring the product to be processed from a feed pipe (13) into the drum interior (15).

10. The separator as claimed in one of the preceding claims, **characterized in that** the entire drum (2), in addition to the feed system and discharge system and possibly a part of the housing, is designed as an exchangeable preassembled module consisting of plastic or a plastic-composite material.

11. The separator as claimed in one of the preceding claims, **characterized in that** the entire separator, apart from the motor (4), is designed as an exchangeable preassembled module consisting of plastic or a plastic-composite material.

12. The separator as claimed in one of the preceding claims, **characterized in that** the motor (4) is flanged directly onto the housing (1).

13. The separator as claimed in one of the preceding claims, **characterized in that** the product-contacting sections of the discharge system consist of plastic.

14. The separator as claimed in one of the preceding claims, **characterized in that** the discharge regions of the discharge system are designed as annular channels which open axially into annuluses (28, 29) in annular bodies (30, 31).

15. The separator as claimed in claim 15, **characterized in that** the annular bodies (30, 31) consist of plastic or a plastic-composite material.

16. The separator as claimed in one of the preceding claims, **characterized in that** a drum cover (27) consisting of plastic is mounted on the drum upper section.

17. A method for operating a separator as claimed in one of the preceding claims, **characterized in that** during a clarification process of a product very dense substances are concentrated, and **in that** the drum, after the processing of a batch, is melted down or is dissolved in an acid or the like, for example, in order to produce the dense substance as a residue of this process.

## Revendications

1. Séparateur pour la séparation centrifuge d'un produit fluide en différentes phases ou pour la clarification centrifuge d'un produit, présentant au moins les caractéristiques suivantes :
a. un bol rotatif (2) présentant une partie inférieure de bol (7) et une partie supérieure de bol (8),
b. un moyen disposé dans le bol (2) pour clarifier un produit à traiter dans le champ centrifuge,
c. une ou les deux des parties suivantes étant de forme conique : la partie supérieure de bol et la partie inférieure de bol (8, 7),
d. plusieurs ou tous les éléments suivants étant constitués de matière plastique ou d'un matériau composite plastique :
- la partie inférieure de bol (7),
- la partie supérieure de bol (8),
- le moyen de clarification,
**caractérisé en ce que**
e. le bol (2) avec son système d'alimentation et son système de décharge est réalisé en construction étanche et
f. au moins un canal de décharge pour une phase de produit lourde est intégré dans la partie supérieure de bol (8).

2. Séparateur selon la revendication 1, **caractérisé en ce que** le moyen de clarification est un paquet de disques (20) constituée d'une pile de disques séparateurs (20').

3. Séparateur selon la revendication 1 ou 2, **caractérisé en ce que** le bol (2) peut être mis en rotation par une structure à broche (3).

4. Séparateur selon la revendication 3, **caractérisé en ce que** la structure à broche (3) est constituée d'une matière plastique ou d'un matériau composite plastique.

5. Séparateur selon l'une des revendications 3 ou 4 précédentes, **caractérisé en ce que** la structure à broche (3) est directement couplée à l'arbre de sortie (5) d'un moteur (4) et que la structure à broche (3) ne présente aucun palier de rotation sur sa périphérie extérieure.

6. Séparateur selon l'une des revendications précédentes, **caractérisé en ce que** toutes les zones du bol (2) en contact avec le produit sont constituées de matière plastique.

7. Séparateur selon l'une des revendications précédentes, **caractérisé en ce que** le bol (2) est entouré par un carter (1).

8. Séparateur selon l'une des revendications précédentes, **caractérisé en ce que** l'ensemble du séparateur, à l'exception du moteur (4), est constitué de matière plastique.

9. Séparateur selon l'une des revendications précédentes, **caractérisé en ce que** la partie inférieure de bol (7) est pourvue directement d'une seule pièce d'une saillie de distribution (11) qui présente des canaux de distribution (13) pour transférer le produit à traiter d'un tube d'alimentation (13) dans l'espace intérieur de bol (15).

10. Séparateur selon l'une des revendications précédentes, **caractérisé en ce que** l'ensemble du bol (2) avec le système d'alimentation et de décharge et, éventuellement, une partie du carter, est conçu comme un module prémonté échangeable en matière plastique ou en un matériau composite plastique.

11. Séparateur selon l'une des revendications précédentes, **caractérisé en ce que** l'ensemble du séparateur, à l'exception du moteur (4), est réalisé sous la forme d'un module prémonté échangeable en matière plastique ou en un matériau composite plastique.

12. Séparateur selon l'une des revendications précédentes, **caractérisé en ce que** le moteur (4) est directement bridé sur le carter (1).

13. Séparateur selon l'une des revendications précédentes, **caractérisé en ce que** les sections du système de décharge en contact avec le produit sont constituées de matière plastique.

14. Séparateur selon l'une des revendications précédentes, **caractérisé en ce que** les zones de décharge du système de décharge sont réalisées sous la forme de canaux annulaires qui débouchent axialement dans des espaces annulaires (28, 29) dans des corps annulaires (30, 31).

15. Séparateur selon la revendication 15, **caractérisé en ce que** les corps annulaires (30, 31) sont constitués de matière plastique ou d'un matériau composite plastique.

16. Séparateur selon l'une des revendications précédentes, **caractérisé en ce qu'**un couvercle de bol (27) constitué de matière plastique est placé sur la partie supérieure de bol.

17. Procédé de fonctionnement d'un séparateur selon l'une des revendications précédentes, **caractérisé en ce que** des substances très lourdes sont concentrées pendant un processus de clarification d'un produit et que le bol est fondu après le traitement d'un lot ou, par exemple, dissous dans un acide ou analogue afin de récupérer la substance lourde en tant que résidu de ce processus.
